# EUROPEAN PATENT SPECIFICATION

(11) **EP 3 925 833 B1**
(45) Date of publication and mention of the grant of the patent: **14.02.2024**
(21) Application number: 20181227.8
(22) Date of filing: 19.06.2020
(51) Int. Cl.: B60R 16/00, F16L 3/10

(54) **FASTENING CLIP**
BEFESTIGUNGSCLIP
CLIP DE FIXATION

(43) Date of publication of application: 22.12.2021
(73) Proprietor: Illinois Tool Works INC., Glenview, IL 60025 (US)
(72) Inventor: YON, Fulvio Pacifico, Illinois, 60025 (US); COCCOZ, Andrea Giovanni, Illinois, 60025 (US)
(74) Representative: HGF

(56) References cited:
- EP-A1- 2 530 335
- CN-A- 104 482 307
- CN-A- 108 302 255
- CN-U- 203 517 005
- DE-U1- 29 618 513
- GB-A- 2 261 701
- US-A1- 2007 278 358
- US-A1- 2012 318 935

## Description

The present invention relates to a fastening clip for use in a vehicle. In particular, the present invention relates to a fastening clip with a damping portion.

### Background

It is generally known in the motor vehicles sector that is it required to fasten various components, such as, for example, tubes, cables, container etc. to a vehicle structure (e.g. within the engine bay or inside panels) utilising many types of fasteners. One such fastener that is used throughout a vehicle may be a fastening clip, commonly referred to as a routing clip. Fastening clips according to the preamble of claim 1, such as that discussed in DE 296 18 513 U1, can be used to secure, as well as, mount tubes, rods, cords or bolts to a vehicle structure.

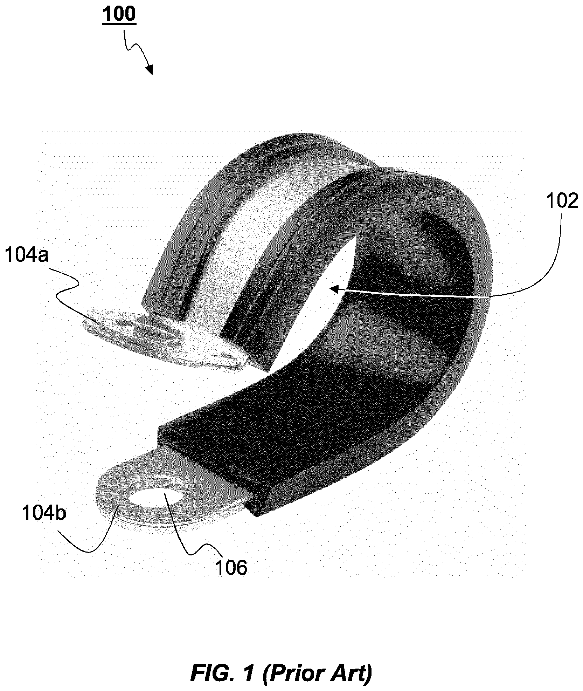

Figure 1 shows an example of a typical rubber-lined P-clip 100 commonly used to affix component members (e.g. tubes, pipes, cables) to the vehicle body. The P-clip 100 may be made from a flexible steel or a stainless-steel one-piece band that is at least partially lined with a rubber, so as to form a tube retaining portion 102. The band ends 104 may be provided with apertures or through-holes 106 and are formed so as to sit flush when mounted to a component member. The band ends 104 may also be tightened around the component member (e.g. tube) using a suitable fastener (e.g. bolt and nut) that is also mounting the P-clip 100 to a portion of the vehicle body.

However, it is known that the numerous components attached to a vehicle structure (e.g. the engine bay) are often subjected to vibrations (e.g. from the engine) potentially putting considerable stress onto the attached components, as well as, the mounts and connections with the vehicle structure. Thus, vibrations, such as the ones generated by the vehicle engine, may damage these component(s) or connection(s) and couplings with the vehicle structure, or simple cause unwanted noise. Currently available clips, such as the P-clip 100, are understood to provide a direct pathway from the vehicle structure to the metal band and the attached component (e.g. tube) with no or little damping provided, for example, by the rubber liner. Further, often the customer requires the P-clip to be shipped/transported to the customer already pre-assembled to the component (e.g. tube, pipe) before it is installed to the vehicle and the connection between the P-clip and the component may be compromised during such transport.

Therefore, it would be desirable to provide a fastening clip that can alleviate or at least mitigate one or more of the aforementioned problems. Particularly, it is an object of the invention to provide an improved fastening clip with increased wear and tear resistance, and which may be modular and/or adaptable to provide for a suitable fit for differently shaped structures.

The present invention provides at least an alternative to fastening clips of the prior art.

### Summary of the Invention

In accordance with the present invention there is provided a fastening clip according to the appended claims.

According to a first aspect of the present invention there is provided a fastening clip for a vehicle, comprising:
a fastener portion, having a first member and a second member, said second member is hingeably coupled with said first member, so as to allow relative movement about a pivot axis between an open position and a closed position, said first member and said second member are configured to cooperatingly form a circular clamp when in said closed position that is adapted to securingly receive a component member of the vehicle, said circular clamp having a central axis parallel to said pivot axis;
a coupling portion, coupled to any one of said first and second member and having at least one aperture that is adapted to operably engage with a fastening element, configured to secure said fastening clip to a structure of the vehicle, and wherein said circular clamp comprises at least one engaging element projecting radially inward from an inner surface of any one of said first and second member towards said central axis, and which is adapted to absorb vibration energy transmitted from the vehicle structure and/or the component member of the vehicle, when in use.

The circular clamp comprises at least three engaging elements circumferentially spaced apart on said inner surface formed by said first and second member.

This provides the advantage of at least three contact points between the clamp and the tube adapted to secure the tubular structure, as well as, provide vibration dampening, during use. Further, the strategically spaced apart elements allows for a minimised amount of material that is required, while at the same time, providing an improved vibration dampening or energy dissipation between the clip and the tube. Also, equidistant circumferential distribution of the engaging elements allows the vibration energy to be absorbed substantially uniformly from all directions across the circular clamp.

At least one of said at least three engaging elements may be provided on said first member and two of said at least three engaging elements may be provided on said second member. This provides the advantage of an improved interference fit with the component member compared to a radial design, considering the same closure force. Thus, the friction provided between engaging elements and the component member is higher, allowing the fastening clip to be supplied pre-assembled on the component member and ensuring that the correct position of the fastener is maintained during the transport and handling of the component member.

Two of said at least three engaging elements provided on said second member are operably linked by a rib portion projecting from said inner surface formed by said first and second member.

According to the invention the rib portion may be an integral portion of said two of said at least three engaging elements that is arranged so as to form a H-shaped profile on said inner surface formed by said first and second member. The integral arrangement of the engaging elements allows for a simplified manufacturing process.

Advantageously, said at least one engaging element is operably coupled with any one of said first and second member so as to extent between said inner surface and an outer surface formed by said first and second member. By having the engaging element extend all the way through any one of the first and second members, a continuous and uninterrupted vibration dampening pathway is provided between the secured tubular structure and the vehicle structure. This pathway minimises the vibration energy transmitted between the vehicle structure and the fastening clip, thereby, reducing wear and noise, as well as, minimising potential costs (e.g. for repair or replacement, or any other collateral damage caused by vibration).

Preferably, said at least one engaging element may comprise a thermoplastic elastomer (TPE) material. The use of TPE (thermoplastic elastomer) provides a good dampening effect and energy dissipation, whilst allowing for sufficient structural integrity of the fastening clip. Consequently, the use of TPE engaging element providing a fastening clip with an improved lifetime.

Preferably, said coupling portion is formed by a substantially planar structure having an upper surface and a lower surface.

Advantageously, at least one engaging layer is provided at a peripheral edge of said at least one aperture of said coupling portion adapted to absorb vibration energy transmitted from the vehicle structure and/or the component member of the vehicle, when in use. The additional engaging layer (e.g. same TPE as the engaging element(s)) minimises the risk of a direct contact between the first and second member of the fastening element and the vehicle providing a further vibration dampening effect or energy dissipation between the coupling portion and the vehicle structure.

### Brief Description of the Drawings

Embodiments of the invention are now described, by way of example only, hereinafter with reference to the accompanying drawings, in which:
**Figure 1** is an illustration of a typical rubber-lined P-clip known in the prior art;
**Figure 2** shows a perspective view of an example embodiment of a fastening clip according to the present invention when in an open configuration;
**Figure 3** shows the example embodiment of the fastening clip of Figure 2 (a) from a side view , (b) from a top view, (c) a cross sectional view along A-A, and (d) from a bottom view;
**Figure 4** shows a schematic side view of the pivot movement of a clamp member (arrow) of the example embodiment of the fastening clip of Figure 2, moving between an open configuration and a closed configuration (and clamping a tubular structure);
**Figure 5** shows a schematic side view of the example embodiment of the fastening clip of Figure 2 in a closed configuration (clamping a tubular structure) and mounted to a vehicle structure or a bracket, including perspective views of an example fastening clip in use and a typical vehicle with tube component where the fastening clip is utilised;
Figure 6 (a)-(e) shows a perspective view of various other example embodiments of the fastening clip according to the present invention, each one having a different coupling portion (integral or modular attachment) suitable for a specific attachment configuration.

Like reference numerals are used to depict like features throughout.

### Detailed Description

The described example embodiment relates to a retaining device and an associated retaining system, and particularly a fastening clip for securing a tubular member to a vehicle structure. The invention is, however, not limited to a fastening clip for a vehicle.

Certain terminology is used in the following description for convenience only and is not limiting. The words 'right', `left', 'lower', 'upper', 'front', 'rear', 'upward', 'down', 'downward', 'above' and 'below' designate directions in the drawings to which reference is made and are with respect to the described component when assembled and mounted. The words 'inner', 'inwardly' and 'outer', 'outwardly' refer to directions toward and away from, respectively, a designated centreline or a geometric centre of an element being described (e.g. central axis), the particular meaning being readily apparent from the context of the description.

Further, as used herein, the terms 'connected', 'attached', 'coupled', 'mounted' are intended to include direct connections between two members without any other members interposed therebetween, as well as, indirect connections between members in which one or more other members are interposed therebetween. The terminology includes the words specifically mentioned above, derivatives thereof, and words of similar import.

Further, unless otherwise specified, the use of ordinal adjectives, such as, "first", "second", "third" etc. merely indicate that different instances of like objects are being referred to and are not intended to imply that the objects so described must be in a given sequence, either temporally, spatially, in ranking or in any other manner.

Through the description and claims of this specification, the terms "comprise" and "contain" and variations thereof are interpreted to mean "including but not limited to", and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality, as well as, singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The invention is not restricted to the details of any foregoing embodiments. The invention extends to any novel one, or any novel combination, of the features disclosed in this specification (including any accompanying claims, abstract or drawings), or to any novel one, or any novel combination, of the steps of any method or process so disclosed.

The present invention relates to a fastening clip (may also be called a 'comma clip') adapted to retain and secure a tubular element in a clamp or clamping mechanism and mount to a vehicle structure. In particular, the clamp is formed by two hingeably connected clamp members that cooperatingly lock around a tubular or circular component member.

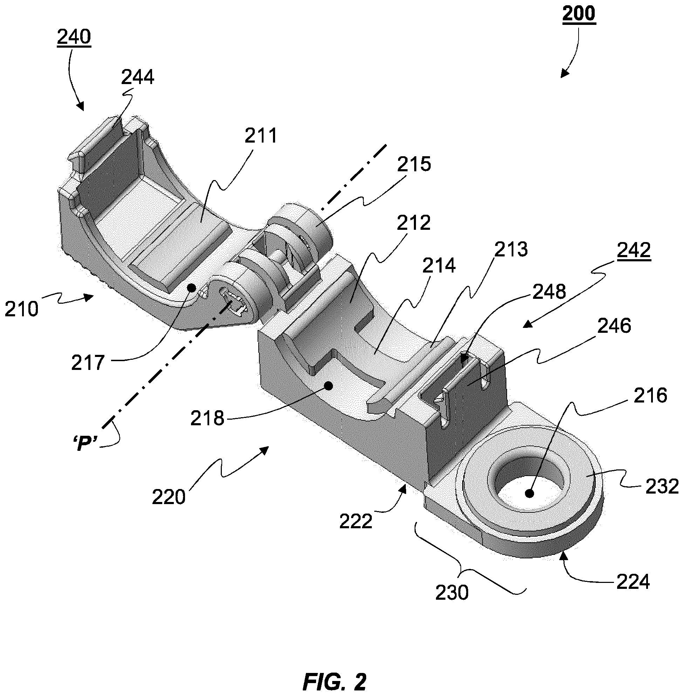

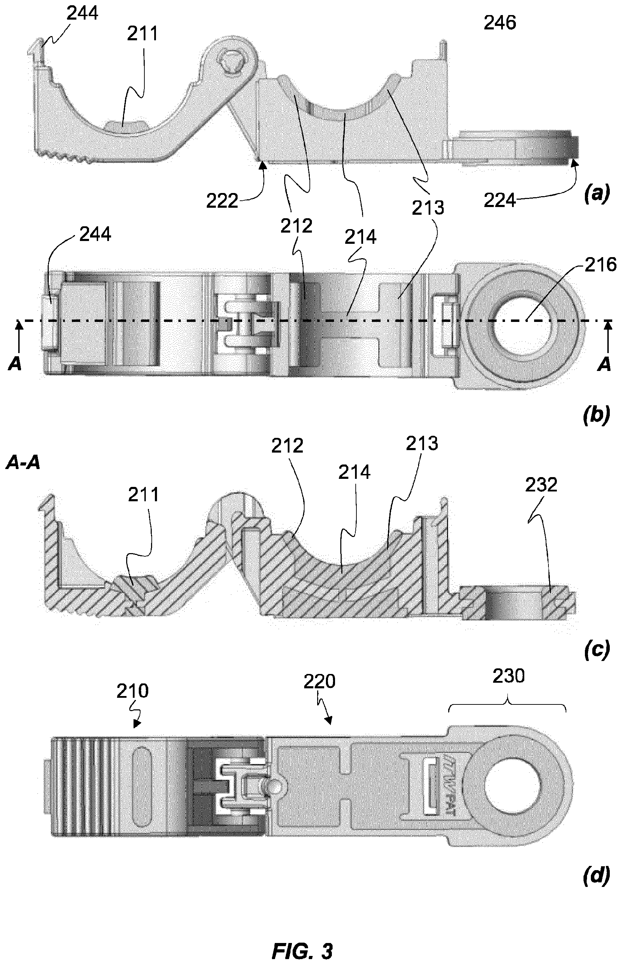

Referring now to Figure 2, an example embodiment of a fastening clip 200 of the present invention may have a first member 210 hingedly coupled with a second member 220, and which is movable between an open configuration and a closed configuration about a pivot axis **'*P*',** so as to form a clamp mechanism for, for example, a cylindrical or tubular component member (e.g. tube, pipe, cable etc.). The first member 210 and the second member 220 may each have a substantially rectangular footprint (see Figure 3 (b) and (d)). The first member 210 includes a first inner clamp surface 217 and, similarly, the second member 220 includes a second inner clamp surface 218, each one configured to cooperate with the other, so as to form a substantially circular inner clamp surface when respective first and second members 210, 220 are in a closed configuration.

The fastening clip 200 further includes a coupling portion 230 extending from a distal end portion and in a direction along the longitudinal axis of the second member 220 (opposite the hinge 215). The coupling portion 230 comprises an aperture 216 suitable for engaging a fastener, such as, a bolt or a screw or a stud, when mounted to an external structure (e.g. vehicle engine bay). In this particular example, a lower surface 224 of the coupling portion 230 is coplanar with an outer surface 222 of the second member 220 forming a substantially even surface for engagement with the vehicle body. However, it is understood by the person skilled in the art that the coupling portion 230 may take any suitable shape, form and position with respect to the second member 220.

A hinge mechanism 215 pivotably couples the first member 210 with the second member 220. The hinge mechanism 215 may be a moulded hinge assembly comprising a male portion, a female portion formed unitarily with the male portion, and a swivel shaft formed unitarily with the male portion. Alternatively, it is understood by the person skilled in the art that any other suitable hinge mechanism may be used.

A plurality of damping members 211, 212, 213 are protruding from the first and second inner clamp surface 217, 218 of respective first 210 and second member 220. The damping members 211, 212, 213 may be circumferentially spaced apart from each other along first and second inner clamp surfaces 217, 218, so as to form a 3-point of contact (i.e. 3-sector design) suitable to centralise the component member 400 within the clamp mechanism when lockingly engaged (i.e. when clamped around a tube or cable). In this particular example, the fastening clip 200 comprises three damping members 211, 212, 213, a first one 211 provided on the first member 210and the second 212 and third one 213 provided on the second member 220. An optimised number (e.g. a minimum of three) of spaced apart damping members 211, 212, 213 can provide an optimised friction engagement with the component member (e.g. pipe or tube or cable), minimising or even avoiding potential sliding of the component member 400 with respect to the fastening clip 20, as well as, an optimised damping effect between the component member 400 and the fastening clip 200, while also providing a user-optimised closure load (i.e. for improved ease of use) when locking the component member 400 into the fastening clip 200. However, it is envisaged that any suitable number of spaced apart damping members may be used in order to provide a stable and uniform clamping and damping engagement with the component member 400.

In this particular example embodiment of the fastening clip 200, the two damping members (e.g. 212 and 213) provided on the second member 220 may be linked by a rib portion 214 that is formed integrally with both, the second 212 and third damping member 213 (e.g. forming a H-feature). Such an integral rib portion 214 may allow for a simplified manufacturing and assembly process (i.e. one moulding process for two members), therefore, minimising manufacturing and assembly time and subsequent costs.

Referring now to Figure 3 (a) to (d), the damping members 211, 212, 213 may be formed and coupled with respective first and second member 210, 220, so as to fully extend from the inner clamp surfaces 217, 218 through to the respective one of the outer surface 222 of the second member 220 or the outer surface 226 of the first member 210 preventing any direct contact between the component member 400 and the first and second member 210, 220, or the first and second member 210, 220 and the vehicle structure, so that vibrations from the vehicle have to pass through the damping members 211, 212, 213 to get to the component member 400 (see Figure 3(c)).

An additional damping sleeve 218 may be provided to the aperture 216 of the coupling portion 230. The damping sleeve 218 may be formed around the inner edge of the aperture 216 so as to extent between an upper surface 228 and the lower surface 224 of the coupling portion 230. Further, the additional damping sleeve 218 may be integrally formed with the second and third damping member 212, 213 and damping rib 214 (see Figure 3(c)). Therefore, all point(s) of contact between the fastening clip 200 and the vehicle structure is(are) via any one of the damping members 211, 212, 213, and damping sleeve 218, thus, preventing any undampened connection between the vehicle structure and the clamped component member 400.

The damping members 211, 212, 213 and damping sleeve 218 may be formed of a material with sufficient vibration damping and/or energy dissipation capabilities, such as, for example, provided by a thermoplastic elastomer (TPE). However, it is understood by the person skilled in the art that any other suitable vibration damping material may be used. For example, the damping material may have particular properties optimised for specific vibration characteristics (frequency, amplitude). The first and second member 210, 220, the hinge 215, as well as, the coupling portion 230 may be made from a substantially rigid plastic material (e.g. PA6, Nylon 6).

Furthermore, the fastening clip 200 comprises a locking mechanism suitable to lockingly engage the distal ends of the first and second member 210, 220. The locking mechanism may be provided by a resilient snap clip, e.g. formed by a male locking portion 240 adapted to lockingly engage with a female locking portion 242. The male locking portion 240 comprises a resilient hook member 244 protruding from the distal end of the first member 210 in a direction perpendicular to the principle longitudinal axis of the first member 210 and facing towards the second member 220, when in the locked configuration. The female locking portion 242 comprises a corresponding catch member 246 protruding from the distal end of the second member 220 in a direction perpendicular to the principle longitudinal axis of the second member 220 and facing towards the first member 210, when in the locked configuration. The catch member 246 may be situated in a cavity 248 provided at the distal end portion of the second member 220 and configured to receive the hook member 244. During use, the hook member 244 is snappingly pushed into engagement with the corresponding catch member 246. Similar and suitable alternative locking mechanisms are well known in the art and will thus not be described in any further detail.

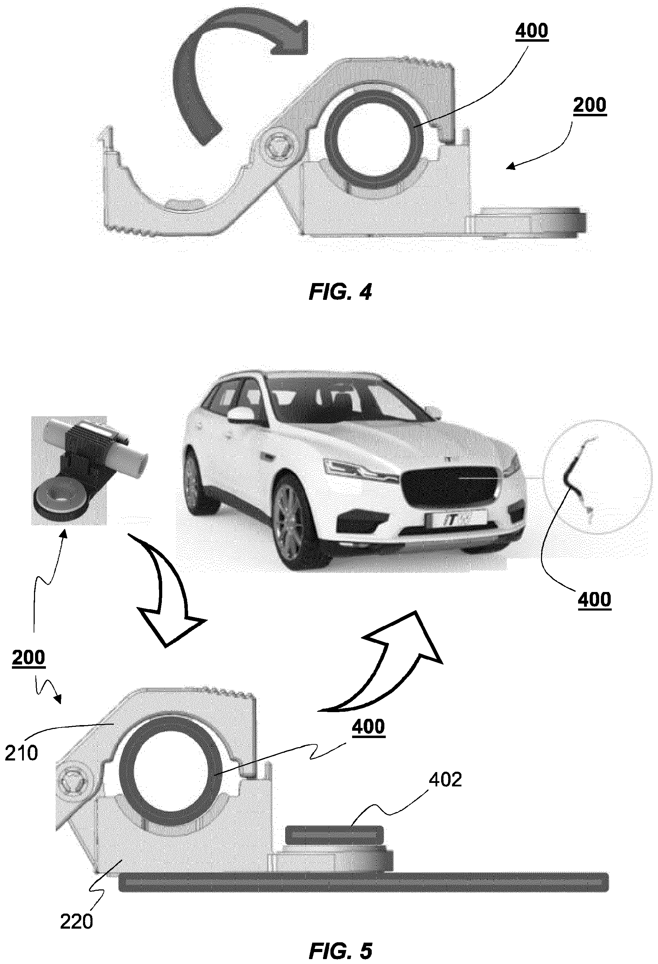

Referring now to Figures 4 and 5, during use, the fastening clip 200 may first be attached or mounted to the vehicle structure (e.g. inside the engine compartment or bay) utilizing a suitable fastener 402 (i.e. a screw, bolt or a clip fastener) that is pushed through the aperture 216 of the coupling portion 230. Then, the component member 400 (e.g. tube, pipe, cable) is pushed into engagement with the second member 220 and the first member 210 is moved from its open configuration to the closed locked configuration (pivoting about the pivot axis A of the hinge 215). When moving the first member 210 into locking engagement with the second member 220, a suitable pressure may be required to compress any one of the respective damping members 211, 212, 213 against the component member 400. Once locked, the resilient damping members 211, 212, 213 may provide a biasing force onto the component member 400, so as to provide sufficient friction between the engaging surfaces, but also allow for sufficient energy dissipation of any vibrations transmitting through the vehicle structure. Again, the additional damping sleeve 216 and integral connection with the other damping members 212, 213 on the outer surface 222 of the second member 220 ensures that there are no direct contact points between the second member 220 and the vehicle structure.

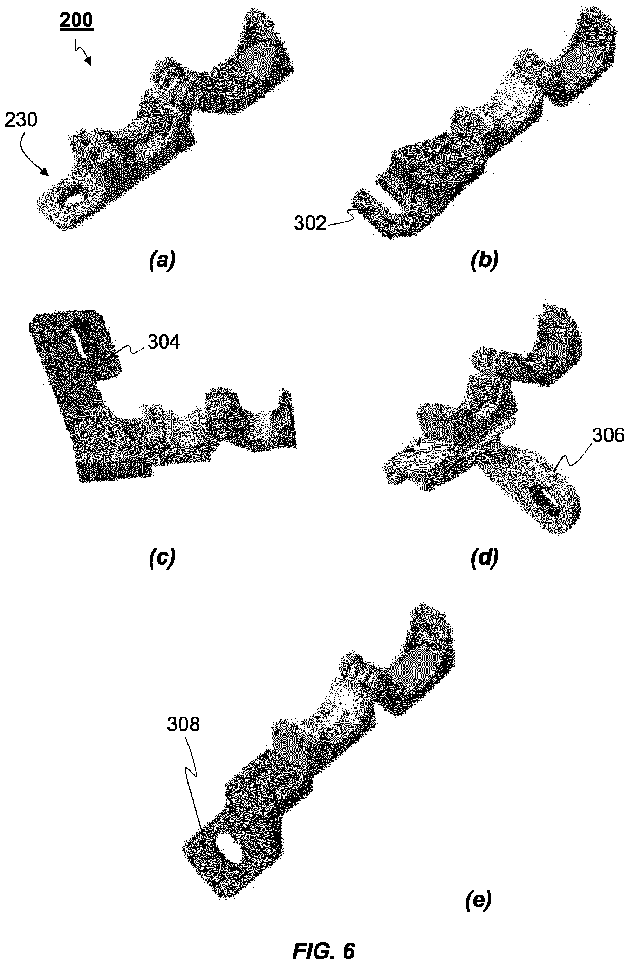

Referring now to Figures 6 (a) to (e), the coupling portion 230 of the fastening clip 200 may have different forms (i.e. shape, orientation, colour etc.), each one suitable for a particular attachment configuration. The different coupling portions 302 to 308 may either be an integral part of the second member 220, or, may be provided as a modular attachment. When provided as a modular attachment, the coupling portion 230 may be configured to demountably receive different modular coupling brackets 302, 304, 306, 308, therefore, allowing for various attachment configurations.

In this particular example, modular coupling brackets 302 to 308 are provided to mountingly engage with the coupling portion 230. The modular coupling bracket 302 to 308 may comprise a snap-fit mount to removably lock onto the coupling portion 230. This allows for countless variations of the coupling brackets that are combinable, for example, with a standard coupling portion of the fastening clip 200, thus, allowing for "tailored" fastening clips suitable for any structural layout. For example, the coupling apertures of the modular coupling brackets 302 to 308 may be angularly offset (at different angles) from the aperture 216 of the coupling portion 230, or, the coupling apertures of the modular coupling brackets 302 to 308 may each have a different design (e.g. U-shaped gap, elongated aperture, circular aperture etc.).

The modular coupling brackets 302 to 308 may be made from the same material as the first and second member 310, 320, e.g. a substantially rigid plastic, such as Nylon 6 (PA6), but may also be made from any other structurally suitable material (e.g. metal, carbon, a polymer compound etc.). During use, the user simply, clips the desired coupling bracket 302 to 308 onto the coupling portion 230 before mounting the fastening clip 200 to the vehicle structure and locking the component member 400 into the vibration dampening clamp mechanism. For removal or disassembly, a suitable tool may be used to open the locked engagement between the first and second member 210, 220, as well as, to unclip the modular coupling bracket 302 to 308 from the coupling portion 230.

### REFERENCE NUMERALS:

- **100**: P-clip
- **102**: tube retaining portion
- **104**: fastening portion
- **106**: through-hole

- **200**: fastening clip
- **210**: first member
- **211**: first damping member
- **212**: second damping member
- **213**: third damping member
- **214**: rib portion
- **215**: hinge
- **216**: aperture
- **217**: first inner clamp surface
- **218**: second inner clamp surface
- **220**: second member
- **222**: outer surface (second member)
- **224**: lower surface (coupling portion)
- **226**: outer surface (first member)
- **228**: upper surface (coupling portion)
- **230**: coupling portion
- **240**: male locking portion
- **242**: female locking portion
- **244**: hook member
- **246**: catch member
- **248**: cavity

- **302-308**: modular coupling bracket

- **'P'**: hinge axis
- **400**: component member
- **402**: fastener

## Claims

1. A fastening clip (200) for a vehicle, comprising:
a fastener portion, having a first member (210) and a second member (220), said second member (220) is hingeably coupled with said first member (210) so as to allow relative movement about a pivot axis ('P') between an open position and a closed position, said first member (210) and said second member (220) are configured to cooperatingly form a circular clamp when in said closed position that is adapted to securingly receive a tubular component of the vehicle, said circular clamp having a central axis parallel to said pivot axis ('P');
a coupling portion (230), coupled to one of said first (210) and second member (220) and having at least one aperture (216) that is adapted to operably engage with a fastening element, configured to secure said fastening clip (200) to a vehicle structure;
wherein said circular clamp comprises at least three engaging elements (211, 212, 213) circumferentially spaced apart on an inner surface (217, 218) formed by said first (210) and second member (220) and projecting radially inward towards said central axis from said inner surface (217, 218), and which is adapted to absorb vibration energy transmitted from the vehicle structure and/or the tubular component of the vehicle, when in use;
wherein at least one (211) of said at least three engaging elements (211, 212, 213) is provided on said first member (210), and two (212, 213) of said at least three engaging elements (211, 212, 213) are provided on said second member (220);
wherein said two (212, 213) of said at least three engaging elements (211, 212, 213) provided on said second member (220) are operably linked by a rib portion (214) projecting from said inner surface (217, 218) formed by said first (210) and second member (220);
**characterised in that** said rib portion (214) is an integral portion of said two (212, 213) of said at least three engaging elements (211, 212, 213) that is arranged so as to form a H-shaped profile on said inner surface (217, 218) formed by said first (210) and second member (220).

2. A fastening clip (200) according to any one of the preceding claims, wherein said at least three engaging elements (211, 212, 213) are operably coupled with said first (210) and second member (220) so as to extend between said inner surface (217, 218) and an outer surface (222, 226) formed by said first (210) and second member (220).

3. A fastening clip (200) according to any one of the preceding claims, wherein said at least three engaging elements (211, 212, 213) comprise a thermoplastic elastomer (TPE) material.

4. A fastening clip (200) according to any one of the preceding claims, wherein said coupling portion (230) is formed by a substantially planar structure having an upper surface (228) and a lower surface (224).

5. A fastening clip (200) according to any one of the preceding claims, wherein at least one engaging layer is provided at a peripheral edge of said at least one aperture (216) of said coupling portion (230) adapted to absorb vibration energy transmitted from the vehicle structure and/or the tubular component of the vehicle, when in use.

## Patentansprüche

1. Befestigungsclip (200) für ein Fahrzeug, aufweisend:
einen Befestigungsabschnitt, der ein erstes Element (210) und ein zweites Element (220) aufweist, wobei das zweite Element (220) gelenkig mit dem ersten Element (210) gekoppelt ist, um eine relative Bewegung um eine Schwenkachse ("P") zwischen einer offenen Position und einer geschlossenen Position zu ermöglichen, wobei das erste Element (210) und das zweite Element (220) so konfiguriert sind, dass sie zusammenwirkend eine kreisförmige Klemme bilden, wenn sie sich in der geschlossenen Position befinden, die dazu ausgelegt ist, eine rohrförmige Komponente des Fahrzeugs befestigend aufzunehmen, wobei die kreisförmige Klemme eine Mittelachse parallel zu der Schwenkachse ("P") aufweist;
einen Kopplungsabschnitt (230), der mit einem von dem ersten (210) und dem zweiten Element (220) gekoppelt ist und zumindest eine Öffnung (216) aufweist, die dazu ausgelegt ist, mit einem Befestigungselement betriebsfähig in Eingriff zu kommen, das so konfiguriert ist, dass es die Befestigungsklammer (200) an einer Fahrzeugstruktur befestigt;
wobei die kreisförmige Klemme zumindest drei Eingriffselemente (211, 212, 213) aufweist, die in Umfangsrichtung auf einer Innenfläche (217, 218) beabstandet sind, die durch das erste (210) und das zweite Element (220) gebildet ist, und von der Innenfläche (217, 218) radial nach innen in Richtung der Mittelachse vorstehen, und die dazu ausgelegt sind, Vibrationsenergie zu absorbieren, die von der Fahrzeugstruktur und/oder der rohrförmigen Komponente des Fahrzeugs im Betrieb übertragen wird;
wobei zumindest eines (211) von den zumindest drei Eingriffselementen (211, 212, 213) an dem ersten Element (210) vorgesehen ist und zwei (212, 213) von den zumindest drei Eingriffselementen (211, 212, 213) an dem zweiten Element (220) vorgesehen sind;
wobei die zwei (212, 213) von den zumindest drei Eingriffselementen (211, 212, 213), die an dem zweiten Element (220) vorgesehen sind, durch einen Rippenabschnitt (214) betriebsfähig verbunden sind, der von der Innenfläche (217, 218) vorsteht, die durch das erste (210) und das zweite Element (220) gebildet ist;
**dadurch gekennzeichnet, dass** der Rippenabschnitt (214) ein integraler Abschnitt der beiden (212, 213) von den zumindest drei Eingriffselementen (211, 212, 213) ist, der so angeordnet ist, dass er ein H-förmiges Profil auf der Innenfläche (217, 218) bildet, die durch das erste (210) und das zweite Element (220) gebildet wird.

2. Befestigungsclip (200) nach einem der vorhergehenden Ansprüche, wobei die zumindest drei Eingriffselemente (211, 212, 213) betriebsfähig mit dem ersten (210) und dem zweiten Element (220) gekoppelt sind, sodass sie sich zwischen der Innenfläche (217, 218) und einer Außenfläche (222, 226) erstrecken, die durch das erste (210) und das zweite Element (220) gebildet ist.

3. Befestigungsclip (200) nach einem der vorhergehenden Ansprüche, wobei die zumindest drei Eingriffselemente (211, 212, 213) ein thermoplastisches Elastomermaterial (TPE-Material) aufweisen.

4. Befestigungsclip (200) nach einem der vorhergehenden Ansprüche, wobei der Kopplungsabschnitt (230) durch eine im Wesentlichen ebene Struktur mit einer oberen Oberfläche (228) und einer unteren Oberfläche (224) gebildet ist.

5. Befestigungsclip (200) nach einem der vorhergehenden Ansprüche, wobei zumindest eine Eingriffsschicht an einer Umfangskante der zumindest einen Öffnung (216) des Kopplungsabschnitts (230) vorgesehen ist, die dazu ausgelegt ist, um Vibrationsenergie zu absorbieren, die von der Fahrzeugstruktur und/oder der rohrförmigen Komponente des Fahrzeugs im Betrieb übertragen wird.

## Revendications

1. Attache de fixation (200) pour un véhicule, comprenant :
une partie de fixation, ayant un premier élément (210) et un deuxième élément (220), ledit deuxième élément (220) étant couplé de manière articulée audit premier élément (210) de manière à permettre un mouvement relatif autour d'un axe de pivotement ('P') entre une position ouverte et une position fermée, ledit premier élément (210) et ledit deuxième élément (220) étant configurés pour former de manière coopérante une pince circulaire lorsqu'ils sont dans ladite position fermée qui est adaptée pour recevoir de manière sûre un composant tubulaire du véhicule, ladite pince circulaire ayant un axe central parallèle audit axe de pivotement ('P') ;
une partie de couplage (230), couplée à l'un parmi lesdits premier (210) et deuxième (220) éléments et ayant au moins une ouverture (216) qui est adaptée pour s'engager de manière opérationnelle avec un élément de fixation, configurée pour fixer ladite attache de fixation (200) à une structure de véhicule ;
dans lequel ladite pince circulaire comprend au moins trois éléments d'engagement (211, 212, 213) espacés circonférentiellement sur une surface interne (217, 218) formée par lesdits premier (210) et deuxième (220) éléments et faisant saillie radialement vers l'intérieur vers ledit axe central à partir de ladite surface interne (217, 218), et qui est adaptée pour absorber l'énergie de vibration transmise à partir de la structure du véhicule et/ou le composant tubulaire du véhicule, lors de l'utilisation ;
dans lequel au moins un (211) parmi lesdits au moins trois éléments d'engagement (211, 212, 213) est fourni sur ledit premier élément (210), et deux (212, 213) parmi lesdits au moins trois éléments d'engagement (211, 212, 213) sont fournis sur ledit deuxième élément (220) ;
dans lequel lesdits deux (212, 213) parmi lesdits au moins trois éléments d'engagement (211, 212, 213) fournis sur ledit deuxième élément (220) sont reliés de manière opérationnelle par une partie de nervure (214) faisant saillie à partir de ladite surface interne (217, 218) formée par lesdits premier (210) et deuxième (220) éléments ;
**caractérisé en ce que** ladite partie de nervure (214) est une partie intégrale parmi lesdits deux (212, 213) parmi lesdits au moins trois éléments d'engagement (211, 212, 213) qui est agencée de manière à former un profil en forme de H sur ladite surface interne (217, 218) formée par lesdits premier (210) et deuxième (220) éléments.

2. Attache de fixation (200) selon l'une quelconque des revendications précédentes, dans laquelle lesdits au moins trois éléments d'engagement (211, 212, 213) sont couplés de manière opérationnelle aux dits premier (210) et deuxième (220) éléments de manière à s'étendre entre ladite surface interne (217, 218) et une surface externe (222, 226) formée par lesdits premier (210) et deuxième (220) éléments.

3. Attache de fixation (200) selon l'une quelconque des revendications précédentes, dans laquelle lesdits au moins trois éléments d'engagement (211, 212, 213) comprennent un matériau élastomère thermoplastique (TPE).

4. Attache de fixation (200) selon l'une quelconque des revendications précédentes, dans laquelle ladite partie de couplage (230) est formée par une structure sensiblement plane ayant une surface supérieure (228) et une surface inférieure (224) .

5. Attache de fixation (200) selon l'une quelconque des revendications précédentes, dans laquelle au moins une couche d'engagement est fournie sur un bord périphérique de ladite au moins une ouverture (216) de ladite partie de couplage (230) adaptée pour absorber l'énergie de vibration transmise à partir de la structure du véhicule et/ou le composant tubulaire du véhicule, lors de l'utilisation.
